# EUROPÄISCHE PATENTSCHRIFT

(11) **EP 0 660 022 B1**
(45) Veröffentlichungstag und Bekanntmachung des Hinweises auf die Patenterteilung: **12.11.1997**
(21) Anmeldenummer: 94118968.0
(22) Anmeldetag: 02.12.1994
(51) Int. Cl.: F16L 37/084

(54) **Lösbare Schnellschlusskupplung**
Releasable quick acting coupling
Raccord rapide démontable

(30) Priorität: 27.12.1993 DE 4344665
(43) Veröffentlichungstag der Anmeldung: 28.06.1995
(73) Patentinhaber: A. Raymond & Cie, F-38028 Grenoble-Cédex (FR)
(72) Erfinder: Moretti, Erminio, F-38000 Grenoble (FR)
(74) Vertreter: Kirchgaesser, Johannes, Dipl.-Ing.

(56) Entgegenhaltungen:
- EP-A- 0 404 361
- EP-A- 0 525 414
- EP-A- 0 545 598
- EP-A- 0 568 075
- EP-A- 0 573 863
- FR-A- 2 684 740
- US-A- 4 123 091
- US-A- 4 925 217
- US-A- 5 141 264

## Beschreibung

Die Erfindung betriffl eine lösbare Schnellschlußkupplung zur Verbindung von Flüssigkeitsleitungen gemäß dem Oberbegriff des Anspruchs 1.

Die vorliegende Erfindung geht aus von dem DE-Patent 43 00 037 C1, welches eine Steckverbindung für Kraftstoffleitungen vorzugsweise im Kraftfahrzeugbereich zum Gegenstand hat. Die hier verwendeten Schnellkupplungen unterliegen hohen Sicherheitsanforderungen, d.h. sie müssen beim Zusammenstecken der beiden Kupplungsteile sicher und zuverlässig schließen und dürfen sich auch nicht durch unvorhergesehene äußere Krafteinwirkungen auf den Haltering von selbst öffnen.

Was die Sicherheit des Verschlusses betriffl, so ist der Monteur in erster Linie auf sein Gefühl und sein Gehör angewiesen, da der Einrastmechanismus nicht einsehbar ist. Er kann an seinen Fingern spüren, wenn beim Eindrücken des Einsteckteils die Haltekanten des Halteelements hinter der Halterippe einrasten. Auch ist das Geräusch des Einrastens normalerweise gut zu hören. Beides sind jedoch subjektive Empfindungen und können durch Erschütterungen oder laute Hallengeräusche überlagert werden, so daß der Monteur sich letztlich auf diese Beweise nicht 100%-ig verlassen kann.

Aufgabe der Erfindung ist es daher, eine Schnellschlußkupplung zu schaffen, die solche unbeabsichtigten Einwirkungen auf das Halteelement wirkungsvoll verhindert und gleichzeitig im Bedarfsfall den Zugriff zum Öffnen der Kupplung ermöglicht. Eine weitere Aufgabe ist es, die Schnellschlußkupplung so zu gestalten, daß neben der akustischen Bestätigung für das Einrasten des Halteelements an der Halterippe auch ein optischer Beweis für den sicheren Verschluß geliefert wird.

Diese Aufgabe wird im wesentlichen durch die im Anspruch 1 angegebene Erfindung gelöst, wobei in den Unteransprüchen noch weitere, für die Erfindung förderliche Merkmale enthalten sind.

So ergibt sich bei der Ausbildung der Kupplung nach Anspruch 2 die Möglichkeit, die Schutzkappe samt Stützring und Federstege in einem Stück aus Kunststoff herzustellen. Anspruch 3 sorgt in der Abdeckposition für eine feste Anlage der Schutzkappe am Aufnahmegehäuse und Anspruch 4 bietet die Möglichkeit der visuellen Kontrolle und Bestätigung für das sichere Einrasten des Halteelements an der Halterippe.

In der Zeichnung sind zwei Ausführungsbeispiele der Schnellkupplung mit Schutzkappe dargestellt, die nachfolgend näher erläutert werden. Es zeigt:
- Fig. 1: das Aufnahmegehäuse mit eingebautem Halteelement,
- Fig. 2: eine Ausführungsform der Schutzkappe im Schnitt,
- Fig. 3: das mit einer Flüssigkeitsleitung verbundene Aufnahmegehäuse mit aufgesetzter Schutzkappe,
- Fig. 4: das mit einer Flüssigkeitsleitung verbundene Einsteckteil mit Halterippe,
- Fig. 5: die zusammengesteckte Kupplung mit Schutzkappe in Schutzposition,
- Fig. 6: die Kupplung mit Schutzkappe in Öffnungsposition,
- Fig. 7: das gleiche Aufnahmegehäuse wie Figur 1,
- Fig. 8: eine andere Ausführungsform der Schutzkappe,
- Fig. 9: das Kupplungsgehäuse mit aufgesetzter Schutzkappe,
- Fig. 10: ein Einsteckteil wie Figur 4 mit einem zusätzlichen Anschlagflansch,
- Fig. 11: das mit dem Einsteckteil verbundene Kupplungsgehäuse mit teilweise zurückgeschobener Schutzkappe als Beweis für die eingerastete Verriegelungsposition.

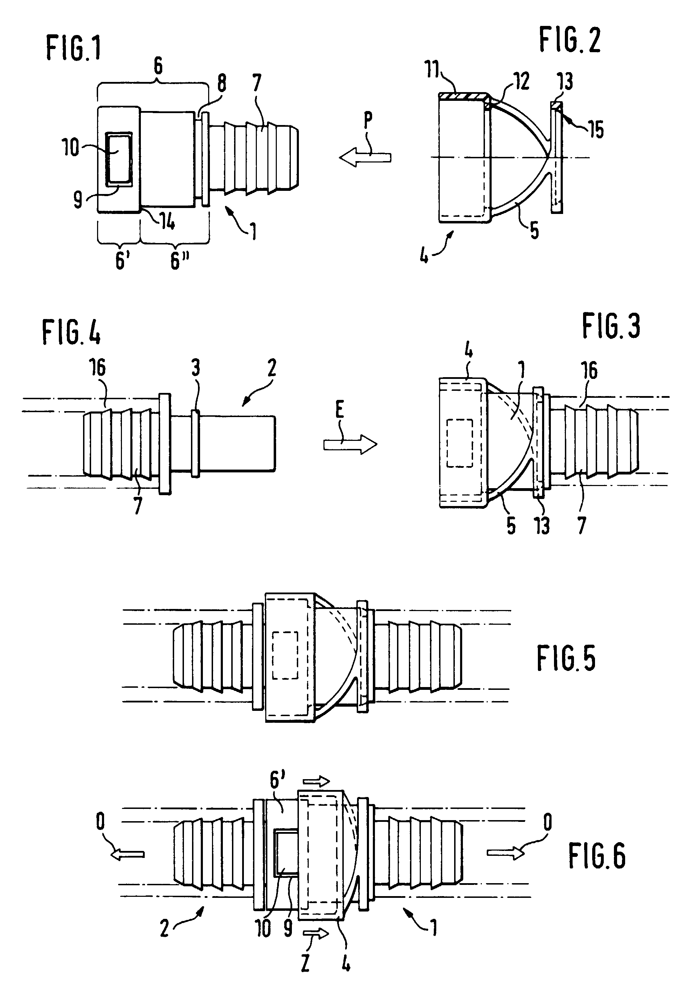

Die in den Figuren dargestellte Schnellschlußkupplung besteht aus einem zylindrischen Kupplungsgehäuse 1, einem rohrförmigen Einsteckteil 2 mit einer umlaufenden Halterippe 3 sowie einer Schutzkappe 4, die über das Kupplungsgehäuse 1 aufschiebbar und mittels Federelemente 5 gegen das rückwärtige Ende des Kupplungsgehäuses 1 abstützbar ist (Figur 3).

Das in Figur 1 gezeigte Kupplungsgehäuse 1 besteht aus einem Aufnahmebereich 6 für das Einsteckteil 2 und einem Anschlußstutzen 7 für die anzuschließende Flüssigkeitsleitung 16. Der Aufnahmebereich 6 ist hierbei aufgeteilt in einen vorderen Bereich 6' und einen hinteren Bereich 6'' mit abgesetztem Außendurchmesser. Kurz vor dem Ende dieses Bereiches 6'' befindet sich eine radial umlaufende Rille 8.

Das Kupplungsgehäuse 1 ist, wie in DE 43 00 037 näher beschrieben, im Bereich 6' mit einem Aufnahmeraum für ein nicht näher dargestelltes, separates Halteelement mit radial nach innen gerichteten, elastisch auffederbaren Haltekanten versehen, welche zum Hintergreifen der Halterippe 3 nach dem Eindrücken des Einsteckteils 2 ausgebildet ist.

Das Halteelement ist hierbei durch eine Öffnung 9 in der zylindrischen Außenwand des Kupplungsgehäuses 1 in den Aufnahmeraum einführbar und kann zum Lösen des Einsteckteils 2 über Druckplatten 10 zusammengedrückt werden, wobei die Haltekanten radial soweit auseinandergehen, daß die Halterippe 3 nicht mehr verriegelt ist.

Die in Figur 2 gezeigte Schutzkappe 4 besteht aus einem zylindrischen Ring 11 mit einem radial nach innen abgesetzten Anschlagring 12, der über schraubenförmig ausgebildete Federstege 5 mit einem Stützring 13 einstückig verbunden ist. Der Ring 11 ist in seinem Innendurchmesser so bemessen, daß er auf das Kupplungsgehäuse 1 in Richtung des Pfeiles "P" bis über den vorderen Aufnahmebereich 6' aufschiebbar ist.

Ebenso ist der Anschlagring 12 im Innendurchmesser so bemessen, daß dieser über den Außenmantel des zweiten Aufnahmebereichs 6'' gleitet bis zur Anschlagfläche 14 des im Durchmesser größeren Aufnahmebereichs 6'. In dieser Stellung rastet der Stützring 13 mit seiner nach innen weisenden Rastkante 15 in die Rille 8 des Aufnahmebereichs 6'' ein, wobei die Stege 5 sich schraubenförmig um den Außenmantel des Bereichs 6'' herumlegen (Figur 3).

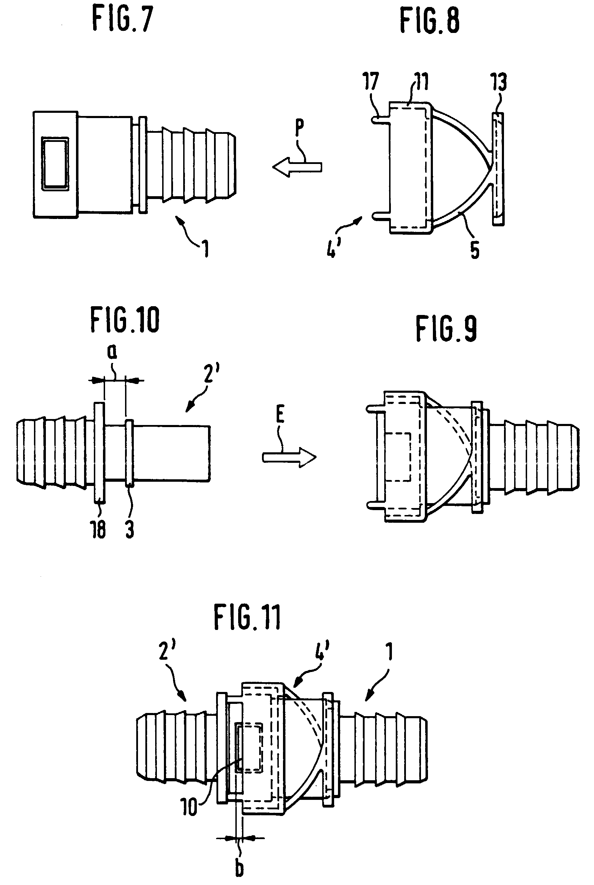

Nach dem Eindrücken des Einsteckteils 2 in das Kupplungsgehäuse 1 (Pfeilrichtung "E") rastet das nicht dargestellte Halteelement hinter der Halterippe 3 ein und die Kupplung ist geschlossen (Figur 5). Will man sie wieder öffnen, so muß zunächst die Schutzkappe 4 in Richtung des Pfeiles "Z" gegen die Schließkraft der Federstege 5 zurückgeschoben werden, bis die Öffnung 9 freiliegt. Sodann werden die einander gegenüberliegenden Druckplatten 10 zusammengedrückt, wodurch das Halteelement sich öffnet und den Haltering 3 freigibt. Nun können die beiden Kupplungshälften 1 und 2 in Richtung der Pfeile "O" auseinandergezogen werden.

In den Figuren 7 bis 11 ist eine weitere Ausführungsform der Schnellschlußkupplung dargestellt, wobei das Kupplungsgehäuse nach Figur 7 die gleiche Bauform hat wie das Kupplungsgehäuse 1 nach Figur 1. Dagegen weist die in Figur 8 gezeigte Schutzkappe 4' an der Stirnseite des Schutzringes 11 zusätzlich noch diametral gegenüberliegend mehrere achsparallele Stützstifte 17 auf, während beim Einsteckteil 2' nach Figur 9 die Einsteckrichtung hinter der Halterippe 3 im Abstand "a" noch einen Flansch 18 angeformt ist. Der Außendurchmesser dieses Flansches 18 und die Stützstifte 17 sind so bemessen, daß die Schutzkappe 4' beim Schließen der Kupplung etwas zurückgeschoben wird, und zwar soviel, daß die Druckplatten 10 in der Öffnung 9 gerade in einer bestimmten Breite "b" sichtbar werden. Damit ist für den Monteur auch visuell die Sicherheit gegeben, daß die Kupplung geschlossen ist. Hierbei empfiehlt es sich, das Halteelement farblich anders zu gestalten, als das Kupplungsgehäuse. Das erleichtert die Visuelle Prüfung.

Zum Öffnen der Kupplung wird genauso verfahren wie bei dem vorgenannten Ausführungsbeispiel nach Fig. 6, d.h., die Schutzkappe wird soweit zurückgeschoben, bis die Öffnung 9 freiliegt. Sodann werden die gegenüberliegenden Druckplatten 10 zusammengedrückt, bis die Halterippe 3 freigeht und das Einsteckteil 2 herausgezogen werden kann.

## Patentansprüche

1. Lösbare Schnellschlußkupplung zur Verbindung von Flüssigkeitsleitungen, bestehend aus einem rohrförmigen Einsteckteil (2) mit einer umlaufenden Halterippe (3) und einem zylindrischen Kupplungsgehäuse (1) mit einem Aufnahmeraum für ein separates Halteelement (10) mit radial nach innen gerichteten, elastisch auffederbaren Haltekanten zum Hintergreifen der Halterippe (3) nach dem Eindrücken des Einsteckteils (2) , wobei das Halteelement (10) durch eine Öffnung (9) in der zylindrischen Außenwand des Kupplungsgehäuses (1) in den Aufnahmeraum einführbar und zum Lösen des Einsteckteils (2) von außen durch die Öffnung (9) eindrückbar ist, **gekennzeichnet** durch eine über das Kupplungsgehäuse (1) schiebbare Schutzkappe (4) , wobei diese mittels eines Federelements (5) gegen das rückwärtige Ende des Gehäuses (1) in ihrer Schutzstellung abgestützt und gegen die Federkraft soweit zurückschiebbar ist, daß die Öffnung (9) zum Eindrücken des Halteelements frei liegt.

2. Schnellschlußkupplung mit Schutzkappe aus hartelastischem Kunststoff nach Anspruch 1, dadurch gekennzeichnet, daß die Schutzkappe ( 4 ) über schraubenförmig gebogene Federstege (5) mit einem Stützring (13) einstückig verbunden ist, welcher am rückwärtigen Ende des Gehäuses (1) in einer radial umlaufenden Rille (8) einrastbar ist.

3. Schnellschlußkupplung nach Anspruch 2 mit einem Aufnahmegehäuse , dessen zylindrische Außenwand hinter dem Aufnahmeraum für das Halteelement auf einen kleineren Außendurchmesser abgesetzt ist, **dadurch gekennzeichnet**, daß die Schutzkappe (4) an ihrem hinteren Ende einen nach innen abgesetzten Anschlagring (12) aufweist.

4. Schnellschlußkupplung nach Anspruch 3, dadurch gekennzeichnet, daß an der Stirnseite der Schutzkappe ( 4 ) mindestens zwei achsparallele Stützstifte (17) vorgesehen sind, welche beim Schließen der Kupplung gegen einen am Einsteckteil (2) angeformten Flansch (18) anliegen und im Laufe des Eindrückens soweit zurückgeschoben werden, daß beim Einrasten des Halteelements an der Halterippe (3) ein kleiner Bereich der Öffnung (9) einsehbar ist.

## Claims

1. A releasable quick-closure coupling for connecting fluid lines, comprising a tubular insertion portion (2) having a peripherally extending holding rib (3) and a cylindrical coupling housing (1) with a receiving space for a separate holding element (10) with radially inwardly directed holding edges which can be elastically sprung open for engaging behind the holding rib (3) after the insertion portion (2) has been pressed in, wherein the holding element (10) can be introduced into the receiving space through an opening (9) in the cylindrical outside wall of the coupling housing (1) and can be pressed in from the outside through the opening (9) to release the insertion portion (2), characterised by a protective cap (4) which can be pushed over the coupling housing (1), wherein the protective cap is supported in its protective position by means of a spring element (5) against the rearward end of the housing (1) and can be pushed back against the spring force to such an extent that the opening (9) is exposed for pressing in the holding element.

2. A quick-closure coupling with protective cap of hard-elastic plastics material according to claim 1 characterised in that the protective cap (4) is integrally connected by way of spring legs (5) which are curved in a helical configuration to a support ring (13) which can be latched at the rearward end of the housing (1) in a radially peripherally extending groove (8).

3. A quick-closure coupling according to claim 2 having a receiving housing whose cylindrical outside wall is stepped behind the receiving space for the holding element to a smaller outside diameter characterised in that at its rearward end the protective cap (4) has an inwardly stepped abutment ring (12).

4. A quick-closure coupling according to claim 3 characterised in that provided on the front face of the protective cap (4) are at least two support pins (17) which are parallel to the axis and which upon closure of the coupling bear against a flange (18) formed on the insertion portion (2) and in the course of the pressing-in operation are pushed back to such an extent that upon latching of the holding element on the holding rib (3) it is possible to observe a small region of the opening (9).

## Revendications

1. Raccord rapide démontable pour le raccordement de conduites de liquide, se composant d'un élément embrochable mâle tubulaire (2) muni d'une nervure de retenue périphérique (3) et d'un élément femelle cylindrique (1) comportant un espace de réception pour un organe de retenue (10) séparé, comportant des arêtes de retenue pouvant se déformer de manière élastique, orientées de manière radiale vers l'intérieur, destinées à venir cramponner par derrière la nervure de retenue (3) après l'emmanchement de l'élément embrochable mâle (2), l'organe de retenue (10) étant en l'occurrence destiné à être engagé en position, par une ouverture (9) ménagée dans la paroi extérieure cylindrique de l'élément femelle (1), dans l'espace de réception, et pour le dégagement de l'élément embrochable mâle (2) à être comprimé, depuis l'extérieur, par l'ouverture (9), caractérisé en ce qu'il comporte un capuchon de protection (4) destiné à glisser sur l'élément femelle (1), celui-ci étant en l'occurrence soutenu, dans sa position de protection, à l'aide d'éléments élastiques (5) contre l'extrémité arrière de l'élément femelle (1) et pouvant être repoussé vers l'arrière en surmontant la force élastique antagoniste qui lui est opposée, dans une proportion telle que l'ouverture (9) est dégagée pour permettre la compression de l'organe de retenue.

2. Raccord rapide muni d'un capuchon de protection en matière plastique à cèdage élastique dur selon la revendication 1, caractérisé en ce que le capuchon de protection (4) est relié de manière solidaire à une bague d'appui (13) par l'intermédiaire de barrettes élastiques (5) recourbées de manière hélicoïdale, qui est destinée à venir s'encastrer dans une gorge radiale périphérique ménagée dans l'extrémité arrière de la partie (1)

3. Raccord rapide selon la revendication 2, comportant un élément femelle, dont la paroi extérieure cylindrique, derrière l'espace de réception pour l'organe de retenue, est réalisé à un plus petit diamètre extérieur, caractérisé en ce que le capuchon de protection (4) comporte, au niveau de son extrémité arrière, une bague de butée (12) décalée vers l'intérieur.

4. Raccord rapide selon la revendication 3, caractérisé en ce qu'au niveau du côté antérieur du capuchon de protection (4) sont prévues au moins deux pattes d'appui (17) parallèles à l'axe qui, lors de la fermeture du raccord, viennent s'appliquer en butée contre une bride (18) réalisée solidaire par moulage de l'élément embrochable mâle et qui, lors de la compression, peuvent être repoussées vers l'arrière dans une proportion telle que, lors de l'encastrement de l'organe de retenue au niveau de la nervure de retenue (3), une petite zone de l'ouverture (9) est visible.
